# EUROPEAN PATENT SPECIFICATION

(11) **EP 1 783 031 B1**
(45) Date of publication and mention of the grant of the patent: **31.10.2012**
(21) Application number: 05257817.6
(22) Date of filing: 19.12.2005
(51) Int. Cl.: B62D 5/04, F16C 23/08

(54) **Electric automotive power steering with a belt-type transmission**
Elektrische Fahrzeugservolenkung mit Riemengetriebe
Direction assistée de voiture avec transmission à courroie

(30) Priority: 04.11.2005 KR 2005105633
(43) Date of publication of application: 09.05.2007
(73) Proprietor: Mando Corporation, Pyeongtaek-si, Gyeonggi-do (KR)
(72) Inventor: Jo, Heegwon, Wonju-si, Gangwon-do (KR); Joo, Namgung, Wonju-si, Gangwon-do (KR)
(74) Representative: Jehle, Volker Armin

(56) References cited:
- US-B1- 6 644 432
- PATENT ABSTRACTS OF JAPAN vol. 2003, no. 12, 5 December 2003 (2003-12-05) & JP 2003 291830 A (HONDA MOTOR CO LTD), 15 October 2003 (2003-10-15)

## Description

The present invention relates to an electric power steering apparatus for an automobile. More particularly, Embodiments of the present invention relate to an electric power steering apparatus for an automobile having a belt-type transmission device. Embodiments of the present invention relate to an electric power steering apparatus, as well as a self-aligning bearing positioned on a motor shaft for easy belt mounting and a simple assembly process of the transmission device.

United States Patent numbers 6644432 discloses an electric power steering assembly. The assembly includes a steering member, a one piece integral ball nut and a pulley member, a lone bearing unit, and an electric motor. The steering member is disposed in a rack housing and includes a rack portion operatively connected to a vehicle steering wheel and a screw portion. The one piece integral ball nut and pulley member is operatively connected to the screw portion of the rack portion of the steering member for effective axial movement of the steering member upon rotation of the vehicle steering wheel.

As is generally known in the art, power steering apparatuses for automobiles include a hydraulic power steering apparatus utilizing hydraulic pressure of a hydraulic pump, which has been used since its initial introduction, and an electric power steering apparatus utilizing an electric motor, use of which has been gradually universalized since the 1990's.

In the existing hydraulic power steering apparatus, a hydraulic pump, which is a power source for supplying steering power, is driven by an engine, which causes the hydraulic pump to continuously consume energy regardless of whether or not the steering wheel is being rotated. In the electric power steering apparatus, when steering torque is generated by rotation of a steering wheel, a motor supplies steering power in proportion to the generated steering torque. Therefore, in terms of energy efficiency, the electric power steering apparatus is more advantageous than the hydraulic power steering apparatus.

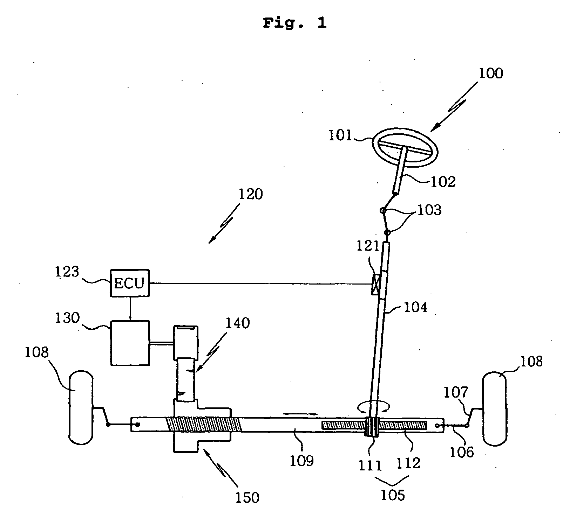

As shown in FIG. 1, a known electric power steering apparatus for an automobile includes a steering system 100, which includes elements leading from a steering wheel 101 to both wheels 108, and a steering power mechanism 120 for supplying steering power to the steering system 100.

The steering system 100 includes a steering shaft 102 having an upper end connected to the steering wheel 101 and a lower end connected to a pinion shaft 104 via a pair of universal joints 103, so that the steering shaft 102 rotates together with the steering wheel 101. The pinion shaft 104 is connected to a rack bar 109 via a rack-pinion mechanism 105. Both ends of the rack bar 109 are connected to the wheels 108 of the automobile via tie rods 106 and knuckle arms 107.

The rack-pinion mechanism 105 includes a pinion gear 111 formed on the lower end of the pinion shaft 104 and a rack gear 112 formed on one side of the outer peripheral surface of the rack bar 109 to engage with the pinion gear 111. The rack-pinion mechanism 105 converts the rotational motion of the pinion shaft 104 into a linear motion of the rack bar 109. Particularly, when the driver operates the steering wheel 101, the pinion shaft 104 rotates accordingly. The rotation of the pinion shaft 104 causes the rack bar 109 to move linearly in the shaft direction. The linear motion of the rack bar 109 is transmitted to and thereby operates the wheels 108 via the tie rods 106 and the knuckle arms 107.

The steering power mechanism 120 includes a torque sensor 121 for sensing steering torque applied to the steering wheel 101 by the driver and outputting an electric signal in proportion to the sensed steering torque, an ECU (electronic control unit) 123 for generating a control signal based on the electric signal from the torque sensor 121, a motor 130 for generating steering power based on the control signal from the ECU 123, and a belt-type transmission device 140 for transmitting the steering power from the motor 130 to the rack bar 109 via a belt.

The electric power steering apparatus is operated as follows: when the driving wheel 101 is rotated, driving torque is generated and transmitted to the rack bar 109 via the rack-pinion mechanism 105. In addition, the generated steering torque causes the motor 130 to generate steering power, which is transmitted to the rack bar 109 via the belt-type transmission device 140 and a ball screw unit 150. As such, the steering torque generated by the steering system 100 is combined with the steering power generated by the motor 130, so that the rack bar 109 is moved in the shaft direction.

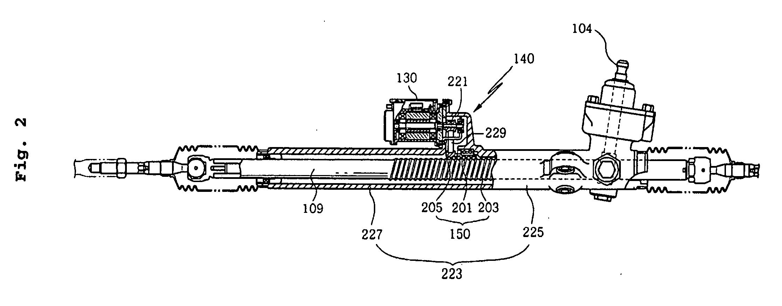

As shown in FIG. 2, the known electric power steering apparatus for an automobile includes a rack bar 109 extending in the transverse direction of the automobile and having a rack gear positioned on one side of the outer peripheral surface thereof; a pinion shaft 104 having a pinion gear positioned on its lower end to engage with the rack gear; a ball screw unit 150 having a ball nut 205 adapted to engage with a ball screw 203 via a ball 201; a belt-transmission device 140 for connecting the ball nut 205 to a motor shaft 221; and a motor 130.

The pinion shaft 104 is connected to the driving wheel via a driving shaft. The rack bar 109 has a screw formed on one side of the outer peripheral surface thereof with a predetermined length and is contained in a rack housing 223. The rack housing 223 includes a first housing 225 adjacent to the rack gear and a second housing 227 adjacent to the motor.

The belt-type transmission device 140 includes a belt 229 for connecting the motor shaft 221 and the ball nut 205. The belt-type transmission device 140 transmits steering power from the motor 130 to the rack bar 109 via the ball nut 205 in proportion to steering torque applied to the steering wheel.

If the motor shaft 221, the ball nut 205, and the rack bar 109 are not parallel to one another, the belt-type transmission device 140 cannot fully transmit power from the motor 130 to the rack bar 109. In addition, if the belt 229 is not tightly coupled to the motor shaft 229 and the ball nut 205, power transmission is insufficient.

In order to position the motor shaft 221 and the ball nut 205 parallel to each other and tightly connect the belt 229 to them, the motor shaft 221 and the ball nut 205 may be allowed to move relative to each other.

In particular, the motor 221 and the ball nut 205 are initially placed adjacent to each other, in order to couple the belt 229 to them, and, after the coupling, they are placed far from each other to tension the belt 229.

However, this approach makes the belt-type transmission device complicated and increases the number of components. As a result, the assembly process becomes complicated and the manufacturing cost increases.

The present invention has been made in view of the above mentioned problems.

Embodiments of the present invention seek to provide an electric power steering apparatus for an automobile having a belt-type transmission device, as well as a self-aligning bearing positioned on a motor shaft, to simplify the structure of the belt-type transmission device, reduce the number of components, and decrease the manufacturing cost.

In order to accomplish this, embodiments of the present invention provide an electric power steering apparatus for an automobile including a pinion shaft connected to a steering wheel of the automobile; a rack bar having a ball screw formed on an outer peripheral surface thereof; a motor for generating steering power; a motor pulley positioned on a motor shaft of the motor; a motor pulley housing for enclosing the motor shaft and the motor pulley; a self-aligning bearing positioned between an outer peripheral surface of an end of the motor shaft and an inner peripheral surface of the motor pulley housing; a ball nut adapted to engage with the ball crew via a ball; a ball nut pulley positioned on an outer peripheral surface of the ball nut; and a belt for connecting the motor pulley and the ball nut pulley to each other.

Embodiments of the invention will now be described by way of non-limiting example only, with reference to the drawings, in which:
FIG. 1 shows the construction of a known electric power steering apparatus for an automobile;
FIG. 2 is a partial sectional view showing a known electric power steering apparatus for an automobile;
FIG. 3 is a sectional view showing a belt-type transmission device embodying the present invention;
FIGs. 4a, 4b, and 4c briefly show a series of steps for connecting a belt to a driving shaft provided with a self-aligning bearing, respectively;
FIG. 5 shows the construction of an electric power steering apparatus for an automobile embodying the present invention; and
FIG. 6 is a partial sectional view showing an electric power steering apparatus for an automobile embodying the present invention.

Hereinafter, an embodiment of the present invention will be described with reference to the accompanying drawings. In the following description and accompanying drawings, like reference signs indicate like parts.

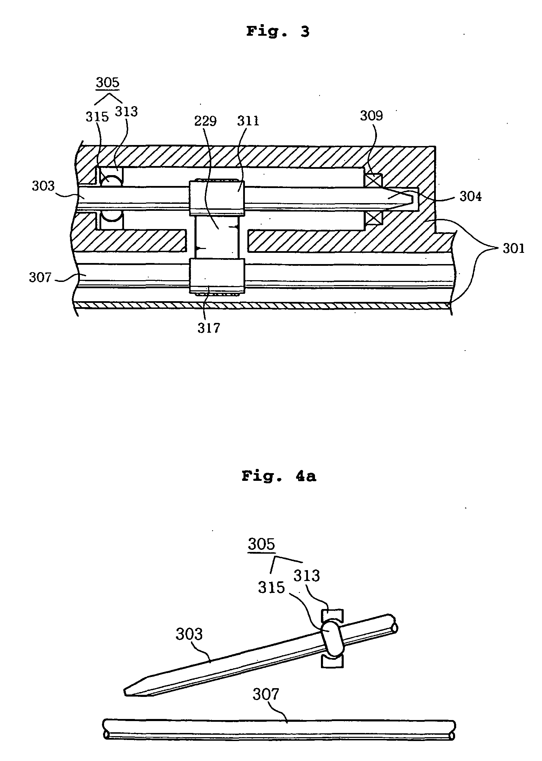

As shown in FIG. 3, the belt-type transmission device embodying the present invention includes a transmission device housing 301; a rotatable driving shaft 303 contained in the transmission device housing 301; a self-aligning bearing 305 positioned between the outer peripheral surface of an end of the driving shaft 303 and the inner peripheral surface of the transmission device housing 301; a rotatable driven shaft 307 spaced a predetermined distance from the driving shaft 303; and a belt 229 for connecting the driving shaft 303 and the driven shaft 307.

The transmission device housing 301 encloses various components of the belt-type transmission device, including the driving shaft 303 and the driven shaft 307, and protects them from external impact or dust to ensure proper driving.

The transmission device housing 301 may be divided into at least two sub-housings, which enclose the driving shaft 303 and the driven shaft 307, respectively, for convenient fabrication and assembly of the belt-type transmission device. The transmission device housing 301 may be made of a metallic material having predetermined rigidity.

The driving shaft 303 is a cylindrical rotation shaft having a predetermined diameter and is adapted to transmit inputted rotational force to the driven shaft 307. The driving shaft 303 has various actuators, including a motor, connected to the input side to rotate the driving shaft 303.

A bearing 309 is positioned between the outer peripheral surface of an output-side end 304 of the driving shaft 303 and the inner peripheral surface of the transmission device housing 301 to rotatably support the driving shaft 303. The bearing 309 may be a ball bearing.

The driving shaft 303 has a tapered output-side end 304 so that, after the belt 229 is connected to the driving shaft 303, the driving shaft 303 can be easily inserted into the bearing 309. This simplifies the assembly process.

The driving shaft 303 has a driving pulley 311 formed thereon in such a manner that it encloses the outer peripheral surface of the driving shaft 303. Therefore, the belt 229 can move while making contact with the outer peripheral surface of the driving pulley 311 and transmit the rotational force of the driving shaft 303 to the driven shaft 307. The driving pulley 311 may be integral with the driving shaft 303. The driving pulley 311 and the belt 229 may have protrusions formed on the outer and inner peripheral surfaces thereof, respectively, to fasten the belt 229 to the driving pulley 311.

The self-aligning bearing 305 is positioned between the outer peripheral surface of the driving shaft 303 and the inner peripheral surface of the transmission device housing 301 while being spaced a predetermined distance from the driving pulley 311. The self-aligning bearing 305 includes an outer wheel 313 and an inner wheel 315.

The outer wheel 313 encloses the outer peripheral surface of the inner wheel 315 and is attached to the inner peripheral surface of the transmission device housing 301 to fix the position of the self-aligning bearing 305. The inner peripheral surface of the outer wheel 313 is a spherical surface, as in the case of the inner peripheral surface of the inner wheel 315.

The outer peripheral surface of the inner wheel 315 is a spherical surface. Therefore, the inner wheel 315 of the self-aligning bearing 305 can freely rotate in any direction while making contact with the inner peripheral surface of the outer wheel 313. In contrast, the inner wheel of a known bearing can solely perform circular motion about a central shaft of the bearing.

The structure and function of the self-aligning bearing are widely known in the art, and further description thereof will be omitted herein.

The driven shaft 307 is adapted to receive rotational force from the driving shaft 303 and output it. Particularly, the driven shaft 307 is spaced a predetermined distance from the driving shaft 303 and receives rotational force from the driving shaft 303 via the belt 229.

The driven shaft 307 has a driven pulley 317 formed thereon while enclosing the outer peripheral surface of the driven shaft 307, so that the belt 229, which is connected to the driving shaft 303, can move while making contact with the outer peripheral surface of the driven pulley 317 and transmit rotational force to the driven shaft 307. The driven pulley 317 and the belt 229 may have protrusions formed on the outer and inner peripheral surfaces thereof, respectively, to fasten the belt 229 to the driven pulley 317.

At least one belt 229 connects the driving shaft 303 and the driven shaft 307 to each other and transmits rotational force from the driving shaft 303 to the driven shaft 307. The belt 229 may be made of any of various materials, including metal and plastic. The belt 229 may have protrusions formed on the inner peripheral surface thereof, which engage with the protrusions formed on the driving shaft 303 or the driven shaft 307.

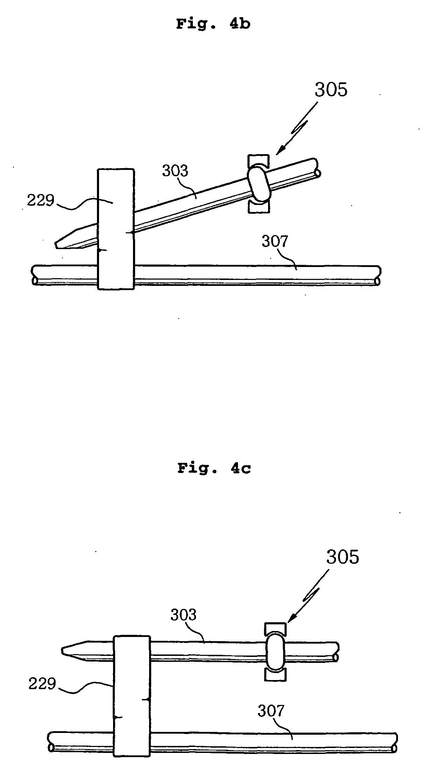

As shown in FIGs. 4a, 4b, and 4c, when the belt 229 is connected to the driving shaft 303 provided with the self-aligning bearing 305, the inner wheel 315 of the self-aligning bearing 305 can freely rotate while the outer wheel 313 remains stationary. Therefore, the driving shaft 303 can be slanted in the direction of the driven shaft 307. After the belt 229 is connected to the driving shaft 303, the driving shaft 303 can return to a position parallel to the driven shaft 307.

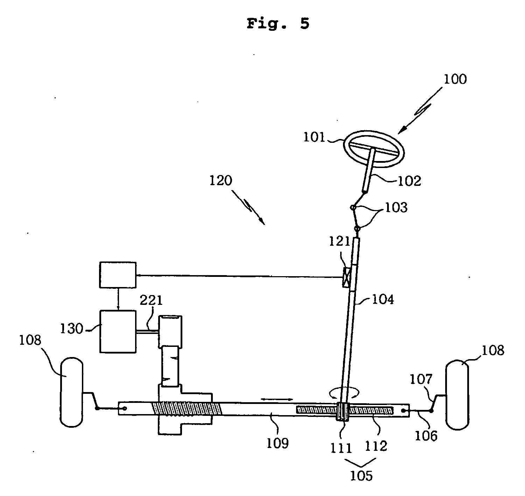

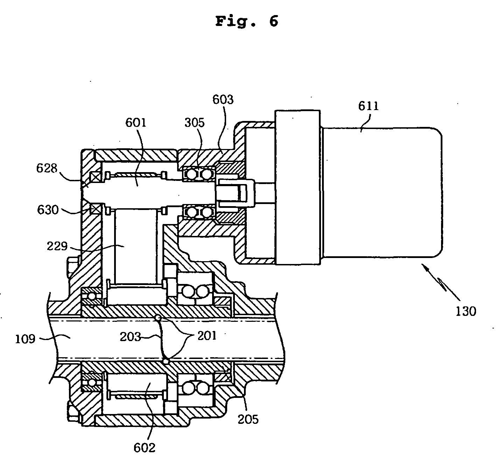

As shown in FIGs. 5 and 6, the electric power steering apparatus for an automobile embodying the present invention includes a steering wheel 101 of the automobile; a pinion shaft 104 connected to the steering wheel 101 and having a pinion gear 111 formed on the lower end thereof; a rack bar 109 connected to both wheels 108 of the automobile and having a rack gear 112 formed on one side thereof, which engages with the pinion gear 111, and a ball screw 203 formed on the other side thereof; a motor 130 for generating steering power in proportion to steering torque generated by the steering wheel 101; a motor pulley 601 positioned on a motor shaft 221; a motor pulley housing 603 for enclosing the motor shaft 221 and the motor pulley 601; a self-aligning bearing 305 positioned between the outer peripheral surface of an end of the motor 221 and the inner peripheral surface of the motor pulley housing 603; a ball nut 205 adapted to engage with the ball screw 203 of the rack bar 109 via a ball 201; a ball nut pulley 602 positioned on the outer peripheral surface of the ball nut 205; and a belt 229 for connecting the motor pulley 601 and the ball nut pulley 602 to each other.

The pinion shaft 104 is connected to the steering wheel 101 via a steering shaft 102 and has a pinion gear 111 formed on one side thereof.

Both ends of the rack bar 109 are connected to the wheels 108 of the automobile via tie rods 106 and knuckle arms 107, respectively, while being contained in a rack housing. The rack bar 109 has a rack gear 112 formed on one side thereof, which engages with the pinion gear 111, and seals positioned in predetermined positions on the inner sides of both ends thereof, in order to prevent lubricant from leaking.

The rack bar 109 receives power from the motor shaft 221 via the belt 229. The rack bar 109 has a ball screw 203 formed on the outer peripheral surface of the other side thereof while extending a predetermined length as a helical groove.

The ball nut 205 engages with the ball screw 203 via the ball 201 while enclosing the outer peripheral surface of the rack bar 109.

The ball nut pulley 602 is formed on the outer peripheral surface of the ball nut 205 and connects the belt 229 to the ball nut 205. The ball nut pulley 602 may be integral with the ball nut 205. The ball nut pulley 602 may have protrusions formed on the outer peripheral surface thereof.

The motor 130 includes a motor housing 611, a cylindrical stator (not shown) contained in the motor housing 611, a rotator (not shown) positioned inside the stator (not shown), and a motor shaft 221 coupled to the rotator (not shown).

The motor shaft 221 is positioned parallel to the rack bar 109. The self-aligning bearing 305 is coupled to one side of the motor shaft 221 so that, when the belt 229 is connected to the motor shaft 221, the motor shaft 221 can be slanted toward the rack bar 109. After connecting the belt 229 to the motor shaft 221, the motor shaft 221 can return to a position parallel to the rack bar 109.

The left end 628 of the motor shaft 221 is tapered and is rotatably supported by a bearing 309, which is positioned on the motor pulley housing 603. The bearing 309 may be a ball bearing, but the type is not limited to that herein.

The motor pulley 601 is positioned adjacent to the left end 628 of the motor shaft 221. The belt 229 is connected to the motor pulley 601 and transmits steering power from the motor 130 to the rack bar 109. The motor pulley 601 may be integral with the motor shaft 221. The motor pulley 601 may have protrusions formed on the outer peripheral surface thereof.

The belt 229 connects the motor pulley 601 and the ball nut pulley 602 to each other to transmit steering power from the motor 130 to the rack bar 109. If necessary, the belt 229 may have protrusions formed on the inner peripheral surface thereof, which correspond to the protrusions formed on the outer peripheral surface of the motor pulley 601 or the ball nut pulley 602, so that the belt 229 can be driven while being fastened to the motor pulley 601 or the ball nut pulley 602.

The remaining construction and operation of the electric power steering apparatus according to the second embodiment are the same as those of the first embodiment. Therefore, the same components are given the same reference numerals and a repeated description will not be given.

As mentioned above, the electric power steering apparatus for an automobile according to embodiments of the present invention is advantageous in that a self-aligning bearing is positioned on a motor shaft to simplify the structure of the belt-type transmission device, reduce the number of components, and decrease the manufacturing cost.

Embodiments of the present invention have now been described with reference to an example. The present invention is only limited by the following claims.

## Claims

1. An electric power steering apparatus for an automobile (100) comprising:
a pinion shaft (104) connected to a steering wheel (101) of the automobile;
a rack bar (109) having a ball screw (105) formed on an outer peripheral surface thereof;
a motor (103) for generating steering power;
a motor pulley (311) positioned on a motor shaft (303) of the motor (103);
a motor pulley housing (301) for enclosing the motor shaft (303) and the motor pulley (311);
a ball nut (205) adapted to engage with the ball screw (203) via a ball (201);
a ball nut pulley (317) positioned on an outer peripheral surface of the ball nut (205); and
a belt (229) for connecting the motor pulley (311) and the ball nut pulley (317) to each other;
wherein the steering apparatus is **characterised by**:
a self-aligning bearing (305) positioned between an outer peripheral surface of an end of the motor shaft (303) and an inner peripheral surface of the motor pulley housing (301).

2. An electric power steering apparatus for an automobile (100) according to claim 1, wherein the motor pulley (311) has protrusions formed on an outer peripheral surface thereof, the ball nut pulley (317) has protrusions formed on an outer peripheral surface thereof, and the belt (229) has protrusions formed on an inner peripheral surface thereof to engage with the protrusions of the motor pulley (311) and the ball nut pulley (317), respectively.

3. An electric power steering apparatus for an automobile (100) according to claim 1, wherein a bearing (309) is positioned between an outer peripheral surface of the other end (304) of the motor shaft (303) and the motor pulley housing (301).

4. An electric power steering apparatus for an automobile according to claim 1, wherein the other end (304) of the motor shaft (303) is tapered.

## Patentansprüche

1. Elektrische Servolenkungsvorrichtung für ein Fahrzeug (100), mit:
einer Ritzelwelle (104), die mit einem Lenkrad (101) des Fahrzeugs verbunden ist;
einer Zahnstange (109), an deren äußerer Umfangsfläche eine Kugelumlaufspindel (105) ausgebildet ist;
einem Motor (103) zum Erzeugen von Lenkkraft;
einer Motorriemenscheibe (311), die an einer Motorwelle (303) des Motors (103) angeordnet ist;
einem Motorriemenscheibengehäuse (301) zum Umschließen der Motorwelle (303) und der Motorriemenscheibe (311);
einer Kugelmutter (205), die ausgelegt ist, um über eine Kugel (201) in die Kugelumlaufspindel (105) einzugreifen;
einer Kugelmutter-Riemenscheibe (317), die an der äußeren Umfangsfläche der Kugelmutter (205) angeordnet ist; und
einem Riemen (229), um die Motorriemenscheibe (311) und die Kugelmutter-Riemenscheibe (317) miteinander zu verbinden;
wobei die Lenkvorrichtung **gekennzeichnet ist durch**:
ein Ausgleichspendellager (305), das zwischen der äußeren Umfangsfläche eines Endes der Motorwelle (303) und der inneren Umfangsfläche des Motorriemenscheibengehäuses angeordnet ist.

2. Elektrische Servolenkungsvorrichtung für ein Fahrzeug (100) nach Anspruch 1, wobei die Motorriemenscheibe (311) Vorsprünge aufweist, die an ihrer äußeren Umfangsfläche ausgebildet sind, die Kugelmutter-Riemenscheibe (317) Vorsprünge aufweist, die an ihrer äußeren Umfangsfläche ausgebildet sind, und der Riemen (229) Vorsprünge aufweist, die an seiner inneren Umfangsfläche ausgebildet sind, um mit den Vorsprüngen der Motorriemenscheibe (311) bzw. der Kugelmutter-Riemenscheibe (317) in Eingriff zu treten.

3. Elektrische Servolenkungsvorrichtung für ein Fahrzeug (100) nach Anspruch 1, wobei ein Lager (309) zwischen der äußeren Umfangsfläche des anderen Endes (304) der Motorwelle (303) und dem Motorriemenscheibengehäuse angeordnet ist.

4. Elektrische Servolenkungsvorrichtung für ein Fahrzeug nach Anspruch 1, wobei das andere Ende (304) der Motorwelle (303) sich verjüngt.

## Revendications

1. Appareil de direction à assistance électrique pour une automobile (100) comprenant :
un arbre de pignon (104) connecté à un volant (101) de l'automobile ;
une barre à crémaillère (109) ayant une vis à billes (105) formée sur une surface périphérique extérieure de celle-ci ;
un moteur (103) pour générer une énergie d'assistance ;
une poulie (311) de moteur positionnée sur un arbre (303) de moteur du moteur (103) ;
un logement (301) de poulie de moteur pour contenir l'arbre (303) de moteur et la poulie (311) de moteur ;
un écrou sphérique (205) adapté à s'engager avec la vis à billes (203) par l'intermédiaire d'une bille (201) ;
une poulie (317) d'écrou sphérique positionnée sur une surface périphérique extérieure de l'écrou sphérique (205) ; et
une courroie (229) pour connecter la poulie (311) de moteur et la poulie (317) d'écrou sphérique l'une à l'autre ;
dans lequel l'appareil de direction est **caractérisé par**:
un palier à alignement automatique (305) positionné entre une surface périphérique extérieure d'une extrémité de l'arbre (303) de moteur et une surface périphérique intérieure du logement (301) de poulie de moteur.

2. Appareil de direction à assistance électrique pour une automobile (100) selon la revendication 1, dans lequel la poulie (311) de moteur a des saillies formées sur une surface périphérique extérieure de celle-ci, la poulie (317) d'écrou sphérique a des saillies formées sur une surface périphérique extérieure de celle-ci, et la courroie (229) a des saillies formées sur une surface périphérique intérieure de celle-ci pour s'engager avec les saillies de la poulie (311) de moteur et de la poulie (317) d'écrou sphérique, respectivement.

3. Appareil de direction à assistance électrique pour une automobile (100) selon la revendication 1, dans lequel un palier (309) est positionné entre une surface périphérique extérieure de l'autre extrémité (304) de l'arbre (303) de moteur et le logement (301) de poulie de moteur.

4. Appareil de direction à assistance électrique pour une automobile (100) selon la revendication 1, dans lequel l'autre extrémité (304) de l'arbre (303) de moteur est conique.
